# EUROPÄISCHE PATENTANMELDUNG

(11) **EP 3 235 581 A1**
(43) Veröffentlichungstag der Anmeldung: **25.10.2017**
(21) Anmeldenummer: 16166311.7
(22) Anmeldetag: 21.04.2016
(51) Int. Cl.: B23B 51/02, B28D 1/14

(54) **BOHRER**

(71) Anmelder: HILTI Aktiengesellschaft, 9494 Schaan (LI)
(72) Erfinder: Foser, Roland, 9491 Ruggell (LI); Domani, Guenter, 88138 Weissensberg (DE); Pluemacher, Bastian, 86830 Schwabmünchen (DE)
(74) Vertreter: Hilti Aktiengesellschaft Corporate Intellectual Property

(57) **Zusammenfassung**

Ein Bohrer für den Abbau von mineralischen Werkstoffen hat auf einer Längsachse **6** aufeinanderfolgend einen Bohrkopf **2,** eine Wendel **3,** ein Einsteckende **4** und eine Schlagfläche **7** an einer dem Bohrkopf **2** abgewandten Stirnseite des Einsteckendes **4** zum Aufnehmen von Schlägen längs einer Schlagrichtung **8.** Der Bohrkopf **2** hat wenigstens zwei Schneiden **13** und wenigstens zwei Klingen **20.** Die Schneiden **13** haben jeweils eine Spanfläche **16** und eine Freifläche **17.** Die Klingen **20** sind parallel zu der Längsachse **6** verlaufen und grenzen an die Schneiden **13** an. Die Klingen **20** haben jeweils einen radial vorstehenden Zahn **24,** welcher an die Spanfläche **16** angrenzt und nicht oder nur teilweise an die Freifläche **17** angrenzt. Eine axiale Abmessung **29** des Zahns **24** ist geringer als eine axiale Abmessung **25** der Klinge **20.**

## Beschreibung

### GEBIET DER ERFINDUNG

Die vorliegende Erfindung betrifft einen Bohrer zum meißelnden Abbau von mineralischen Werkstoffen.

Ein Bohrer für den Abbau von mineralischen Werkstoffen ist aus der EP 2192302 B1 bekannt. Der Bohrkopf hat kreuzförmig angeordnete vier Arme. Die Arme bilden in Schlagrichtung weisende Schneiden und eine zentrale Spitze aus. Die Arme haben eine prismatische Gestalt.

### OFFENBARUNG DER ERFINDUNG

Der erfindungsgemäße Bohrer für den Abbau von mineralischen Werkstoffen hat auf einer Längsachse aufeinanderfolgend einen Bohrkopf, eine Wendel, ein Einsteckende und eine Schlagfläche an einer dem Bohrkopf abgewandten Stirnseite des Einsteckendes zum Aufnehmen von Schlägen längs einer Schlagrichtung. Der Bohrkopf hat wenigstens zwei Schneiden und wenigstens zwei Klingen. Die Schneiden haben jeweils eine Spanfläche und eine Freifläche. Die Klingen sind parallel zu der Längsachse verlaufen und grenzen an die Schneiden an. Die Klingen haben jeweils einen radial vorstehenden Zahn, welcher an die Spanfläche angrenzt und nicht oder nur teilweise an die Freifläche angrenzt. Eine axiale Abmessung des Zahns ist geringer als eine axiale Abmessung der Klinge.

Der Zahn verringert die Kontaktfläche des Bohrkopfs mit einer Bohrlochwand, sobald die Bohrlochwand sauber ausgeschabt ist. Die gegenüber der Höhe des Bohrkopfs oder der seitlichen Klingen verkürzte Höhe des Zahns erweist sich als ausreichend, um dennoch ein ausreichend kreisförmiges Bohrloch zu erhalten.

Eine Ausgestaltung sieht vor, dass die Klingen eine Freifläche aufweisen, die in Schlagrichtung vor dem Zahn und in dem Drehsinn hinter dem Zahn angeordnet ist, wobei ein radialer Abstand der Freifläche zu der Längsachse geringer als ein radialer Abstand des Zahns zu der Längsachse ist. Der Bohrkopf weist nicht einfach eine geringere Höhe auf, sondern setzt sich unterhalb des Zahns fort. Die weitere Höhe dient der mechanischen Stabilität des Bohrkopfs. Der Zahn kann eine zylindrische Außenfläche aufweisen, welche vorteilhafterweise bündig an der Bohrlochwand laufen kann.

Eine Ausgestaltung sieht vor, der Zahn an eine Abfuhrnut angrenzt. Der Zahn bildet somit den in Drehsinn vorderen Teil der Klinge.

Eine axiale Abmessung des Zahns kann zwischen 50 % und 80 % der axialen Abmessung der Klinge betragen. Der Zahn hat eine substantielle Abmessung, jedoch ist deutlich kleiner als die Klinge.

Eine Ausgestaltung sieht vor, dass bei dem Bohrer die wenigstens zwei Schneiden monolithisch mit zwei weiteren Schneiden verbunden sind. Der Bohrer kann beispielsweise vier der genannten Schneiden oder beispielsweise zwei der Schneiden als Hauptschneiden und zusätzlich zwei Nebenschneiden aufweisen. Die zwei weiteren Schneiden können eine geringere radiale Abmessung wie die wenigstens zwei Schneiden aufweisen. An die zwei weiteren Schneiden angrenzende jeweils eine zu der Längsachse parallele Nebenklinge ist durchgehend prismatisch oder zylindrisch ausgebildet.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Bohrer
- Fig. 2: einen Bohrkopf in einer Seitenansicht

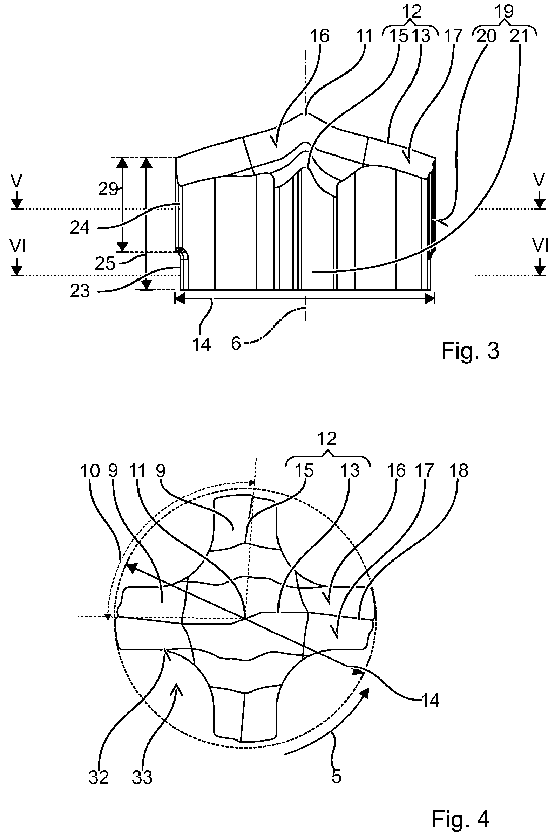

- Fig. 3: den Bohrkopf in einer Seitenansicht, 90 Grad gedreht zu Fig. 2
- Fig. 4: den Bohrkopf in einer Draufsicht

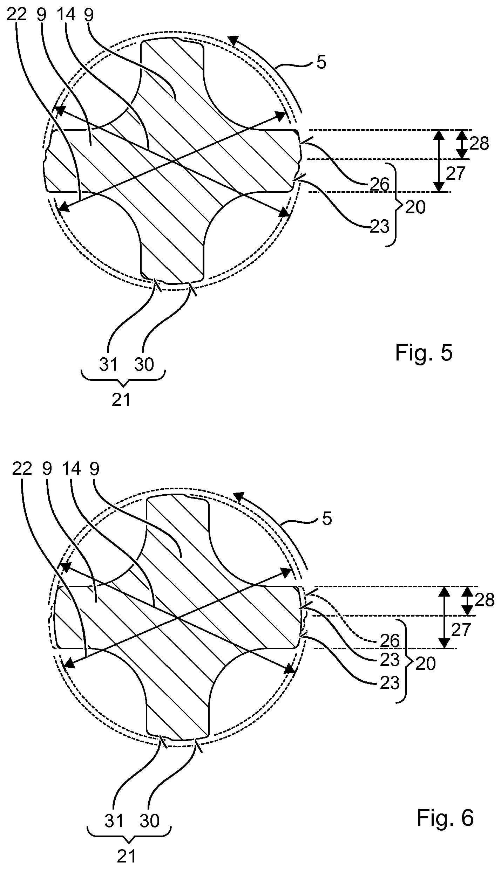

- Fig. 5: einen Querschnitt durch den Bohrer in der Ebene IV-IV
- Fig. 6: einen Querschnitt durch den Bohrer in der Ebene V-V

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

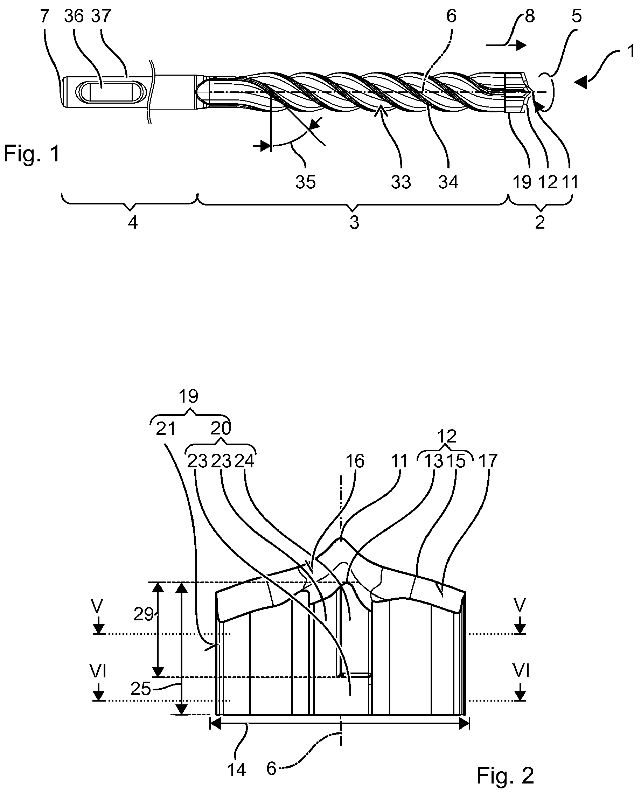

Fig. 1 zeigt einen beispielhaften Bohrer **1**. Der Bohrer **1** hat einen Bohrkopf **2**, eine Wendel **3** und ein Einsteckende **4**. Der Bohrer **1** ist für den Abbau von mineralischen Werkstoffen, insbesondere für den Abbau von armiertem Beton, ausgelegt. Der Bohrer **1** wird im Betrieb in einem Drehsinn **5** um seine Längsachse **6** (Bohrerachse) gedreht. Der Bohrer **1** kann dazu in eine Handwerkzeugmaschine eingesetzt werden, welche einen entsprechenden Drehantrieb aufweist. Ein Schlagwerk der Handwerkzeugmaschine schlägt periodisch auf eine Schlagfläche **7** an der freiliegenden Stirnfläche des Einsteckendes **4.** Die Stoßwelle der Schläge läuft durch die Wendel **3** in Schlagrichtung **8** zu dem Bohrkopf **2.** Der Bohrkopf **2** zertrümmert den Werkstoff. Die Drehbewegung stellt erstens sicher, dass der Bohrkopf **2** unter verschiedenen Orientierungen auf den Untergrund aufschlägt und das Bohrloch gleichmäßig ausgeschlagen wird, und bewirkt zweitens den Abtransport des Bohrguts aus dem Bohrloch mittels der (Transport-) Wendel **3**.

Der beispielhafte Bohrkopf **2** hat vier kreuzförmig um die Längsachse **6** angeordnete Arme **9.** Die benachbarten Arme **9** sind in dem Drehsinn **5** des Bohrers **1** jeweils durch einen Winkel **10** zwischen 60 Grad und 120 Grad voneinander beabstandet. Bei der beispielhaften Ausgestaltung sind die Winkel **10** näherungsweise identisch 90 Grad. Das Beispiel beschreibt den Bohrkopf **2** mit der bevorzugten Anzahl von vier Armen, der Bohrkopf **2** kann auch mit drei, fünf oder sechs Armen ausgebildet sein.

Der Bohrkopf **2** ist vorzugsweise aus einem gesinterten Werkstoff, insbesondere Wolframkarbid, hergestellt. Der Bohrkopf **2** ist vorzugsweise monolithisch, d.h. die Arme **9** sind ohne Fügezone miteinander verbunden, insbesondere ohne Schweißnaht, Lötnaht oder Verschraubung.

Der Bohrkopf **2** hat eine Spitze **11**, welche den in Schlagrichtung **8** höchsten Punkt des Bohrers **1** bildet. Die Spitze **11** gelangt beim Bohren zuerst in Kontakt mit dem Werkstoff. Der beispielhafte Bohrkopf **2** hat vier Schneiden **12**. Die Schneiden **12** sind die in Schlagrichtung **8** weisenden Bereiche der Arme **9**. Die Schneiden **12** werden meißelnd in den mineralischen Werkstoff eingetrieben, wodurch der spröde Werkstoff lokal bricht. Die Schneiden **12** verlaufen im Wesentlichen in radialer Richtung. Die Schneiden **12** haben eine kreuzförmige Anordnung. Die benachbarten Schneiden **12** sind in dem Drehsinn **5** jeweils durch einen Winkel zwischen 60 Grad und 120 Grad voneinander beabstandet. Bei der beispielhaften Ausgestaltung sind die Winkel näherungsweise identisch 90 Grad.

Zwei Hauptschneiden **13** der Schneiden **12** beginnen an einem radialen Rand des Bohrkopfs **2** und treffen sich an der Spitze **11** des Bohrkopfs **2**. Die Hauptschneiden **13** steigen vorzugsweise von einem Rand bis zu der Spitze **11** längs der Schlagrichtung **8** kontinuierlich an. Der Durchmesser **14** des Bohrkopfs **2** kann dem Doppelten der radialen Abmessung der Hauptschneiden entsprechen. Zwei Nebenschneiden **15** der Schneiden **12** beginnen an einem radialen Rand des Bohrkopfs **2** und enden in einem radialen Abstand vor der Spitze **11**. Die Nebenschneiden **15** können von einem radialen Rand hin zu der Spitze **11** ebenfalls in Schlagrichtung **8** ansteigen oder auf konstanter Höhe bleiben. Die Hauptschneiden **13** und die Nebenschneiden **15** sind in dem Drehsinn **5** abwechselnd angeordnet.

Die Schneiden **12** werden jeweils durch eine Spanfläche **16** und eine Freifläche **17** gebildet. Die Spanfläche **16** läuft der Freifläche **17** in dem Drehsinn **5** des Bohrers **1** voraus. Die Spanfläche **16** steigt entlang des Drehsinns **5** des Bohrers **1** in Schlagrichtung **8** kontinuierlich an. Die Freifläche **17** fällt entlang des Drehsinns **5** in Schlagrichtung **8** kontinuierlich ab. Die Spanfläche **16** und die Freifläche **17** sind zueinander geneigt. Der Dachwinkel zwischen der Spanfläche **16** und der Freifläche **17** ist größer als 45 Grad, vorzugsweise größer 60 Grad und geringer als 120 Grad. Die Spanfläche **16** und die Freifläche **17** grenzen in einer Meißelkante **18** aneinander.

Der Bohrkopf **2** hat vier Klingen **19**, die parallel zu der Bohrerachse **6** verlaufen. Die Klingen **19** liegen an der Bohrlochwand an. Die Klingen **19** brechen zu der Bohrerachse **6** vorstehende Vorsprünge von der Bohrlochwand ab während der Bohrer **1** im Drehsinn **5** gedreht wird. Die Klingen **20** sind die radial äußeren Flächen oder Bereiche der Arme **9**. Der radial äußere Rand des Bohrkopfs **2** wird durch die Klingen **19** gebildet. Die Klingen **19** verlaufen in einem radialen Abstand zu der Längsachse **6**, welcher etwa dem halben Durchmesser des Bohrkopfs **2** entspricht. Die Klingen **19** grenzen an den radialen Rand der Schneiden **12** an.

Die an die Hauptschneiden **13** angrenzenden Hauptklingen **20** der Klingen **19** können unterschiedlich zu den an die Nebenschneiden **15** angrenzenden Nebenklingen **21** ausgebildet sein. Insbesondere können die Nebenklingen **21** verglichen zu den Hauptklingen **20** eine geringere radiale Abmessung **22** aufweisen.

Die Hauptklingen **20** weisen eine Freifläche **23** und einen Zahn **24** auf. Die Freifläche **23** ist zylindrisch oder prismatisch ausgebildet. Die prismatische Form nähert eine zylindrische Form an. Ein Radius der Freifläche **23** entspricht dem radialen Abstand zu der Längsachse **6**. Die Freifläche **23** erstreckt sich über die gesamte Höhe **25** der Hauptklinge **20**. Die Freifläche **23** ist parallel zu der Längsachse **6**. Der Zahn **24** steht in radialer Richtung zu der Freifläche **23** vor. Die Hauptklinge **20** liegt bei einem sauber ausgeschabten, zylindrischen Bohrloch nur mit dem Zahn **24** an der Bohrlochwand an. Der Zahn **24** hat vorzugsweise eine zylindrische Außenfläche **26**, deren Radius zu der Längsachse **6** dem halben Bohrerdurchmesser **14** entspricht. Der Radius der Freifläche 23bz kann dem Radius der Nebenschneiden 15bz entsprechen. Die Außenfläche **26** ist beispielsweise gegenüber der Freifläche **23** zwischen 0,2 mm und 1,0 mm versetzt.

Der Zahn **24** bedeckt einen kleinen Abschnitt der Hauptklinge **20**, welcher an die Spanfläche **16** der Hauptschneide **13** angrenzt. Der Zahn **24** grenzt vorzugsweise nicht an die Freifläche **17** der Hauptschneide **13** an. Eine Breite **27** des Zahns **24** ist geringer als die Breite **28** der Hauptklinge **20**, z.B. geringer als die Hälfte der Breite **28** der Hauptklinge **20.** Eine Höhe **29** des Zahns **24** ist geringer als die Höhe **25** der Hauptklinge **20**, beispielsweise liegt die Höhe **29** des Zahns **24** im Bereich zwischen 50 % und 80 % der Höhe **25** der Hauptklinge **20.** Die Breite bezeichnet die Abmessung in dem Drehsinn **5**, d.h. in Umfangsrichtung. Die Höhe bezeichnet die axiale Abmessung, d.h. die Abmessung parallel zu der Längsachse **6**.

Die Nebenklingen **21** weisen eine Spanfläche **30** und eine Freifläche **31** auf. Die Spanfläche **16** läuft der Freifläche **17** im Drehsinn **5** voraus. Die Freifläche **31** ist eine im Wesentlichen konvexe, zylindrische Fläche, die einen Radius gleich dem radialen Abstand zu der Längsachse **6** hat. Die Freifläche **31** ist gegenüber der Spanfläche **30** in radialer Richtung zurückgenommen. Beispielsweise verringert sich der radiale Abstand der Freifläche **31** zu der Längsachse **6** entlang dem Drehsinn **5**. Die Freifläche **31** kann beispielsweise eben sein. Die Spanfläche **30** der Nebenklinge **21** grenzt an die Spanfläche **16** der Nebenschneide an, jedoch nicht an die Freifläche **17** der Nebenschneide **15**. Die Freifläche **31** der Nebenklinge **21** grenzt an die Freifläche **17** der Nebenschneide **15** an, jedoch nicht an die Spanfläche **16** der Nebenschneide **15**. Die Spanfläche **30** und die Freifläche **31** verlaufen über ihre gesamte Höhe **25** parallel zu der Längsachse **6**. Der von der Spanfläche **30** und der Freifläche **31** begrenzte Körper ist prismatisch. Die Nebenklingen **21** sind vorzugsweise gegenüber den Hauptklingen **20** radial nach innen versetzt. Der Bohrkopf **2** liegt entsprechend bei einem sauber ausgeschabten, zylindrischen Bohrloch mit den Hauptklingen **20** an der Bohrlochwand an, während die Nebenklingen **21** mit einem kleinen Spiel, z.B. 0,2 mm bis 0,5 mm, von der Bohrlochwand beabstandet sind.

Der Bohrkopf **2** hat gegenüber den Klingen **19** radial nach innen versetzte Innenflächen **32**, welche weitgehend parallel zu der Längsachse **6** verlaufen. Die Innenfläche **32** bilden Abfuhrnuten für das Bohrgut. Die Innenflächen **32** sind vorzugsweise konkav gewölbt. Die Innenflächen **32** gehen in Wendelnuten **33** der Wendel **3** über und führen das Bohrgut von dem Bohrkopf **2** ab. Der Zahn **24** grenzt vorzugsweise an die Abfuhrnut an, d.h. an die konkave Innenfläche **32**.

Die Wendel **3** des Bohrers **1** hat beispielsweise vier Wendelstege **34**. Die Anzahl der Wendelstege **34** ist vorzugsweise gleich der Anzahl der Schneiden **12**. Die Wendelstege **34** laufen längs der Bohrerachse **6** mehrfach um diese Bohrerachse **6** um. Die Wendelstege **34** beschreiben beim Drehen des Bohrers **1** eine zylindrische Einhüllende, deren Durchmesser einem Wendeldurchmesser entspricht. Jeweils benachbarte Wendelstege **34** schließen zwischen sich eine Wendelnut **33** ein, die in radialer Richtung durch die Einhüllende als geometrisch begrenzt angesehen wird. Das Bohrgut wird in den Wendelnuten **33** durch die Wendelstegen **34** längs der Bohrerachse **6** transportiert. Eine Wendelsteigung **35** liegt vorzugsweise im Bereich zwischen 35 Grad und 60 Grad, z.B. 45 Grad.

Das beispielhafte Einsteckende **4** des Bohrers **1** ist für die Verwendung von drehmeißelnden Handwerkzeugmaschinen ausgelegt. Das Einsteckende **4** hat eine im Wesentlichen zylindrische Form. Das Einsteckende **4** hat zwei geschlossene Nuten **36**, in welchen Verriegelungselemente der Handwerkzeugmaschine radial eingreifen und längs der Bohrerachse **6** gleiten können. Zur Bohrerachse **6** längs ausgerichtete Rillen **37** ermöglichen ein Einleiten eines Drehmoments von der Handwerkzeugmaschine.

Der Bohrer **1** kann anstelle von unterschiedlich ausgebildeten Hauptschneiden **13** und Nebenschneiden **15** auch mit vier Hauptschneiden **13** und entsprechend mit vier Hauptklingen **20** ausgebildet sein. Ferner können die Nebenschneiden **15** den Durchmesser des Bohrkopfs **2** definieren, indem die Nebenschneiden **15** in radialer Richtung über die Hauptschneiden **13** hinausstehen. Die Nebenschneiden **15** sind in diesem Fall mit den Hauptklingen **20** versehen.

## Patentansprüche

1. Bohrer für den Abbau von mineralischen Werkstoffen, der auf einer Längsachse (6) aufeinanderfolgend einen Bohrkopf (2), eine Wendel (3), ein Einsteckende (4) und eine Schlagfläche (7) an einer dem Bohrkopf (2) abgewandten Stirnseite des Einsteckendes (4) zum Aufnehmen von Schlägen längs einer Schlagrichtung (8) aufweist,
wobei der Bohrkopf (2) wenigstens zwei Schneiden (13) und wenigstens zwei Klingen (20) aufweist, wobei die Schneiden (13) jeweils eine Spanfläche (16) und eine Freifläche (17) aufweisen und wobei die Klingen (20) parallel zu der Längsachse (6) verlaufen und an die Schneiden (13) angrenzen,
wobei die Klingen (20) jeweils einen radial vorstehenden Zahn (24) aufweisen, welcher an die Spanfläche (16) angrenzt und nicht oder nur teilweise an die Freifläche (17) angrenzt, und eine axiale Abmessung (29) des Zahns (24) geringer als eine axiale Abmessung (25) der Klinge (20) ist.

2. Bohrer (1) nach Anspruch 1, **dadurch gekennzeichnet, dass** die Klingen (20) eine Freifläche (23) aufweisen, die in Schlagrichtung (8) vor dem Zahn (24) und in dem Drehsinn (5) hinter dem Zahn (24) angeordnet ist, wobei ein radialer Abstand der Freifläche (23) zu der Längsachse (6) geringer als ein radialer Abstand des Zahns (24) zu der Längsachse (6) ist.

3. Bohrer (1) nach Anspruch 2, **dadurch gekennzeichnet, dass** die Freifläche (23) der Klinge (20) zylindrisch ausgebildet ist.

4. Bohrer (1) nach einem der vorhergehenden Ansprüche, **dadurch gekennzeichnet, dass** der Zahn (24) eine zylindrische Außenfläche (26) aufweist.

5. Bohrer (1) nach Anspruch 4, **dadurch gekennzeichnet, dass** ein Radius der zylindrischen Außenfläche (26) dem radialen Abstand zu der Längsachse (6) entspricht.

6. Bohrer (1) nach einem der vorhergehenden Ansprüche, **dadurch gekennzeichnet, dass** der Zahn (24) an eine Abfuhrnut (32) angrenzt.

7. Bohrer (1) nach einem der vorhergehenden Ansprüche, **dadurch gekennzeichnet, dass** eine axiale Abmessung (29) des Zahns (24) zwischen 50 % und 80 % der axialen Abmessung (25) der Klinge (20) beträgt.

8. Bohrer (1) nach einem der vorhergehenden Ansprüche, **dadurch gekennzeichnet, dass** die wenigstens zwei Schneiden (13) monolithisch mit zwei weitere Schneiden (15) verbunden sind.

9. Bohrer (1) nach Anspruch 8, **dadurch gekennzeichnet, dass** die zwei weiteren Schneiden (15) eine geringere radiale Abmessung (22) wie die wenigstens zwei Schneiden (12) aufweisen und an die zwei weiteren Schneiden (15) jeweils eine zu der Längsachse (6) parallele Nebenklinge (21) angrenzt, welche durchgehend prismatisch oder zylindrisch ausgebildet ist.

10. Bohrer (1) nach einem der vorhergehenden Ansprüche, **dadurch gekennzeichnet, dass** der Bohrkopf (2) aus einem gesinterten Metallkarbid und die Wendel (3) aus einem Stahl ist.
